# EUROPEAN PATENT APPLICATION

(11) **EP 0 529 978 A1**
(43) Date of publication of application: **03.03.1993**
(21) Application number: 92307671.5
(22) Date of filing: 21.08.1992
(51) Int. Cl.: C08F 10/02, C08F 2/00, C08F 4/634, C08F 4/635, C08F 2/34

(54) **Multistage polymerisation process**

(30) Priority: 30.08.1991 FR 9111020
(71) Applicant: BP Chemicals Limited, London EC2M 7BA (GB); BP CHEMICALS S.N.C., F-92400 Courbevoie (FR)
(72) Inventor: Havas, Laszlo, F-13117 Lavera (FR); Lalanne-Magne, Claudine, F-13117 Lavera (FR)
(74) Representative: Hymers, Ronald Robson

(57) **Abstract**

The present invention relates to a multistage polymerisation process for producing ethylene polymers, performed in two or more consecutive reactors, with the aid of a catalyst system of the Ziegler-Natta type comprising a catalyst and a cocatalyst. The catalyst used is prepared by a process comprising (a) in a first step, bringing a granular support based on a refractory oxide having hydroxyl groups, into contact with an organometailic compound, (b) in a second step bringing the product resulting from the first step into contact with a monochlorinated organic compound and (c) in a third step, bringing the product resulting from the second step into contact with at least one tetravalent titanium or vanadium compound or a trivalent vanadyl compound.

## Description

The present invention relates to a multistage polymerisation process for producing ethylene polymers.

A process for producing ethylene polymers in the gas phase comprising two steps carried out in two consecutive polymerisation reactors is disclosed in European Patent EP-B-192 427. According to this process, the catalyst used can be chosen from a wide variety of catalysts of the Ziegler-Natta type. When this process is used with a catalyst of the Ziegler-Natta type essentially comprising magnesium, chlorine and titanium atoms, a formation of fine polymer particles can be observed, in particular in the first reactor. This formation of fine polymer particles becomes troublesome when the polymer produced in the first reactor has a high melt index. These fine polymer particles can form polymer agglomerates which can make it necessary to stop the production process. Furthermore fine polymer particles can be entrained by the gas leaving the polymerisation reactor and may cause blockages in the recycle lines.

A multistage process has now been found for producing ethylene polymers comprising two or more steps carried out in consecutive reactors which makes it possible, to overcome or at least mitigate the problem associated with the known process. This process makes it possible, in particular, to reduce appreciably the formation of fine polymer particles when a polymer having a high melt index is produced.

According to the present invention there is provided a multistage polymerisation process for producing ethylene polymers, performed in two or more consecutive polymerisation reactors, with the aid of a catalyst system of the Ziegler-Natta type comprising a catalyst and a cocatalyst, characterised in that the catalyst used is prepared by a process comprising
a) in a first step, bringing a granular support based on a refractory oxide, having hydroxyl groups, into contact with an organometailic compound comprising dialkylmagnesium or dialkylmagnesium and trialkylaluminium,
b) in a second step, bringing the product resulting from the first step into contact with a monochlorinated organic compound of the general formula R₆R₇R₈CCl or of the general formula R₉R₁₀R₁₁CCl, in which R₆ and R₇ are identical or different alkyl radicals comprising from 1 to 6 carbon atoms, R₈ is a hydrogen atom or an alkyl radical comprising from 1 to 6 carbon atoms which is identical to or different from R₆ and R₇, R₉ is an aryl radical comprising from 6 to 10 carbon atoms and R₁₀ and R₁₁ are identical or different radicals chosen from hydrogen, alkyl radicals comprising from 1 to 6 carbon atoms and aryl radicals having from 6 to 10 carbon atoms, which are identical to or different from R₉, and
c) in a third step, bringing the product resulting from the second step into contact with at least one tetravalent titanium or vanadium compound or a trivalent vanadyl compound.

A catalyst of a particular type comprising magnesium, chlorine, titanium and/or vanadium atoms as well as a granular support based on a refractory oxide is used.

The granular support based on refractory oxide has hydroxyl functional groups and advantageously has a specific surface (BET) of between 50 and 1000 m²/g and a pore volume of between 0.5 and 5 ml/g.

The quantity of hydroxyl groups in the support depends on the support used, on its specific surface and on the physicochemical treatment and the drying to which it has been subjected. Generally, a support ready for use contains from 0.1 to 5, preferably from 0.5 to 3, millimoles of hydroxyl groups per gram. The granular support is preferably free from free water at the time of its use in the preparation of the catalyst. The free water can be removed from the granular support by known means, such as a heat treatment performed in the range from 100°C to 950°C. The support can be chosen, for example, from a silica, an alumina, a silica/alumina or a mixture of these oxides. It can be composed of particles having a weight average diameter in the range from 20 to 250 microns, preferably between 30 and 300 microns. A silica is preferably used.

The first step of the preparation of the solid catalyst consists in bringing the granular support into contact with an organometailic compound comprising a dialkylmagnesium preferably of general formula

MgR₁R₂

or the dialkylmagnesium and a trialkylaluminium preferably of general formula

AlR₃R₄R₅

in which R₁, R₂, R₃, R₄ and R₅ are identical or different alkyl radicals comprising from 1 to 12 carbon atoms, preferably from 2 to 8 carbon atoms. The molar ratio of the amount of trialkylaluminium to the amount of dialkylmagnesium preferably should not exceed 1.

Dibutylmagnesium, dihexylmagnesium, butylethylmagnesium, ethylhexylmagnesium or butyloctylmagnesium are preferably used as dialkylmagnesium.

When the dialkylmagnesium is used with a trialkylaluminium, it is possible to prepare beforehand an addition compound of general formula

MgR₁R₂. x AlR₃R₄R₅

in which formula R₁, R₂, R₃, R₄ and R₅ are as defined above and x is a number equal to or less than 1. The addition compound can be prepared by known methods, such as heating at a temperature in the range, preferably, from 30 to 100°C, of a mixture of dialkylmagnesium and trialkylaluminium in solution in a liquid hydrocarbon medium. An addition compound between dibutylmagnesium and triethylaluminium, or dihexylmagnesium and triethylaluminium, or butyloctylmagnesium and triethylaluminium is preferably used.

The dialkylmagnesium, the trialkylaluminium or the addition compound are, preferably, used in the form of a solution in a liquid hydrocarbon, such as n-hexane or n-heptane.

The first step, like, moreover, the other steps of the preparation of the solid catalyst, is carried out in a liquid hydrocarbon medium consisting of at least one saturated hydrocarbon, such as n-butane, n-pentane, isopentane, n-hexane or n-heptane, this hydrocarbon being inert with respect to the various compounds involved in the preparation of the solid catalyst.

During the first step, the organometailic compound becomes fixed on the granular support. It is believed that this fixation results from a reaction between the hydroxyl groups of the granular support and the organometailic compound, and/or from a physicochemical adsorption, probably due in part to a complexation of the organometailic compound by certain oxygen atoms of the refractory oxide. This organometailic compound can be fixed to the support in complex form, in particular in dimer or trimer form. Generally, the value of a support can be estimated by its total capacity for fixing the organometailic compound. Its maximum fixing capacity obviously depends on the nature of the support, on its specific surface and on the physicochemical treatment and the drying to which the support may have been subjected beforehand. Generally, the maximum fixing capacity of a support can be from 1 to 5 millimoles of organometailic compound per gram of support. This maximum capacity can be easily determined by a man skilled in the art, by means of previous trials.

The molar amount of organometailic compound (i.e. dialkylmagnesium and trialkylaluminium) to be used can be in deficiency, or identical, or in excess relative to the number of moles of hydroxyl groups present in the support. However, in order to avoid using an excessive amount of organometailic compound, the amount of this compound effectively used is generally only slightly higher than the maximum amount capable of being fixed to the granular support. During the first step of the process any molar amount of the organometailic compound can be used. However, it is recommended to use a total amount of organometailic compound, of 0.1 to 7.5 millimoles, preferably of 0.5 to 4.5 millimoles and more particularly of 1 to 3.5 millimoles per gram of the support.

The first step can be carried out in various ways. It is possible, for example, to add the organometailic compound to the granular support, previously suspended in the liquid hydrocarbon medium. This addition can be carried out for example over a period of between 10 and 300 minutes, with stirring and at a temperature of between 0°C and 80°C. If a dialkylmagnesium and a trialkylaluminium are used, these are brought into contact with the granular support either at the same time or by successive additions of the two compounds in arbitrary sequence or by addition of the mixture previously formed by these two compounds, to the liquid hydrocarbon medium containing the granular support.

If the organometailic compound has been used in excess relative to the amount corresponding to the maximum fixing capacity of the support, and if the amount of organometallic compound which has remained free in the liquid medium after bringing into contact is excessive, the excess organometailic compound not fixed in the support can be removed by filtering off and/or by one or more washings with the aid of a liquid hydrocarbon. However, it is possible to use a molar amount of organometailic compound which can be up to 1.5 times the amount of organometailic compounds corresponding to the maximum fixing capacity of the support without it subsequently being necessary to remove the excess organometailic compound not fixed in the support.

The second step of the preparation of the solid catalyst consists in bringing the solid product resulting from the first step into contact with a monochlorinated organic compound. This compound can be an alkyl monochloride of general formula

R₆R₇R₈CCl

in which R₆ and R₇ are identical or different alkyl radicals comprising from 1 to 6 carbon atoms and R₈ is a hydrogen atom or, preferably, an alkyl radical comprising from 1 to 6 carbon atoms, which is identical to or different from R₆ and R₇. The alkyl monochloride must be chosen from the secondary alkyl monochlorides or, preferably, the tertiary alkyl monochlorides. Secondary propyl chloride or secondary butyl chloride can be used. Good catalysts are obtained with tert-butyl chloride.

The monochlorinated organic compound can also be a compound comprising at least one aryl radical, of general formula R₉R₁₀R₁₁CCl in which R₉ is an aryl radical comprising from 6 to 10 carbon atoms and R₁₀ and R₁₁ are identical or different radicals chosen from hydrogen, alkyl radicals comprising from 1 to 6 carbon atoms and aryl radicals having from 6 to 10 carbon atoms, which are identical to or different from R₉. Amongst the compounds comprising at least one aryl radical, benzyl chloride or 1-phenyl-1-chloroethane is preferably used.

The chlorination of the organometailic compounds fixed in the granular support is considerably improved by the use of secondary or tertiary alkyl monochlorides or of monochlorinated organic compounds comprising at least one aryl radical.

During this step, the monochlorinated organic compound is used in a relatively small amount which nevertheless enables a solid product to be formed which is substantially free from basic functional groups capable of subsequently reducing a transition metal compound, such as the tetravalent titanium compound used during the third step. The proportion of residual reducing basic functional groups is such that less than 10%, preferably less than 5%, of the transition metal in the intermediate solid product resulting from the third step is in the reduced state.

The amount of monochlorinated organic compound used is such that the molar ratio of the amount of monochlorinated organic compound to the amount of metal of the organometailic compound contained in the product resulting from the first step is between 1 and 3.5, preferably at least 1.5 and at most 3.0.

If there is compliance with this amount of monochlorinated organic compound to be used, not only does the product resulting from the second step contain little or no basic functional groups capable of reducing a compound of a transition metal at its maximum valency, but also at the end of this step there is no longer an excess of monochlorinated organic compound which has not reacted and remains in the free state in the liquid hydrocarbon medium. Generally, the residual amount of monochlorinated organic compound at the end of this step is negligible, and does not exceed about 1000 parts per million by weight (ppm) in the liquid hydrocarbon medium. Thus, it is therefore not necessary to wash the solid product resulting from the second step. Nor it is necessary to purify the liquid hydrocarbon medium after each preparation of the catalyst.

The second step is carried out by bringing the monochlorinated organic compound into contact with the product resulting from the first step, at a temperature in the range from 0°C to 90°C, preferably from 20°C to 60°C. The reaction can be carried out in various ways, for example by adding the monochlorinated organic compound to the product resulting from the first step suspended in the liquid hydrocarbon medium. This addition is carried out for example, over a period of between 10 and 600 minutes, and with stirring.

The third step of the preparation of the solid catalyst consists in bringing the product resulting from the second step into contact with at least one tetravalent titanium or vanadium compound or a trivalent vanadyl compound. Compounds which can be chosen are, in particular, a tetravalent titanium compound of general formula

Ti(OR)ₘX₄₋ₘ

a tetravalentvanadium compound of general formula

V(OR)ₘX₄₋ₘ

or a trivalent vanadyl compound of general formula

VO(OR)ₙX₃₋ₙ

in which R is an alkyl radical comprising from 2 to 6 carbon atoms, X is a chlorine or bromine atom, m is an integer or fraction equal to or higher than 0 and less than 4 and n is an integer or fraction equal to or higher than 0 and less than 3.

Titanium tetrachloride is preferably used.

It is possible to fix by impregnation in the granular support a relatively large amount of titanium and/or vanadium compounds, avoiding any reduction of these compounds. It has been found that when the transition metal compound is reduced to a valency state lower than the maximum valency during the preparation of the catalyst, the latter generally has a reduced activity in the polymerisation of ethylene. For this reason, the product resulting from the second step is substantially free from any basic functional group capable of reducing the titanium and/or vanadium compound. The product obtained under the particular chlorination conditions during the second step is particularly suitable for fixing a large capacity of titanium and/or vanadium compounds. This enables an amount of titanium and/or vanadium compound to be used such that the atomic ratio of the amount of titanium and/or vanadium to the amount of metal of the organometailic compound contained in the granular support is between 0.1 and 0.9. The result of this is that the major proportion, if not all, of the amount of titanium and/or vanadium compound used is fixed in the support with an unchanged valency state.

At the end of this step, the amount of titanium and/or vanadium compound which has remained in the free state in the liquid hydrocarbon medium can be relatively small. Advantageously, it may not be necessary to wash the solid product resulting from this final step. The product can therefore be used directly as solid catalyst in an ethylene polymerisation.

The third step is generally carried out at a temperature in the range from 0 to 150°C, preferably from 20 to 120°C. In practice, the reaction can be carried out in various ways. For example, it is possible to add the titanium and/or vanadium compound or compounds to the product resulting from the second step, suspended in the hydrocarbon liquid medium. This addition is carried out for example over a period of between 10 and 300 minutes, and with stirring.

The third step can be carried out in accordance with a variant which advantageously enables a solid catalyst to be produced which has a particularly high activity in the polymerisation or the copolymerisation of ethylene. It consists, in particular, in bringing the product resulting from the second step into contact with, firstly, at least one titanium or vanadium compound rich in halogen and then with at least one titanium or vanadium compound which has a low halogen content or is free from halogen. The titanium or vanadium compound rich in halogen is chosen, in particular, from a tetravalent titanium compound of general formula

Ti(OR)ₚX₄₋ₚ

a tetravalent vanadium compound of general formula

V(OR)ₚX₄₋ₚ

and a trivalent vanadyl compound of general formula

VO(OR)_{q}X_{3-q}

in which formulae R and X have a definition identical to the above definitions, p is an integer or fraction equal to or greater than 0 and less than 2 and q is an integer or fraction equal to or greater than 0 and less than 1.5. The titanium or vanadium compound or vanadyl trichloride. Titanium tetrachloride is preferably used.

The titanium or vanadium compound having a low halogen content or free from halogen is chosen in particular from a tetravalent titanium compound of general formula

Ti(OR)ᵣX₄₋ᵣ

a tetravalent vanadium compound of general formula

V(OR)ᵣX₄₋ᵣ

and a trivalent vanadyl compound of general formula

VO(OR)ₛX₃₋ₛ

in which formulae R and X have a definition identical to the above definitions, r is an integer or fraction equal to or greater than 2 and less than or equal to 4 and s is an integer or fraction equal to or greater than 1.5 and less than or equal to 3. In particular, the compound which has a low halogen content or is free from halogen is a titanium tetraalkoxide, a vanadium tetraalkoxide or a vanadyl trialkoxide. It is preferably chosen from titanium tetraisopropoxide or vanadium tetraisopropoxide, titanium tetra-n-propoxide or vanadium tetra-n-propoxide, titanium tetrabutoxide or vanadium tetrabutoxide, titanium tetraethoxide or vanadium tetraethoxide, vanadyl trin-propoxide, vanadyl tributoxide and vanadyl triethoxide.

The proportion of titanium or vanadium compounds which have a low halogen content or are free from halogen relative to those rich in halogen, used during this step, can be such that the molar ratio between the former and the latter is between 0.1 and 3, preferably between 0.2 and 2.

The conditions under which the two successive operations of bringing into contact are carried out correspond to those defined above for the use of a single titanium or vanadium compound. In particular, the total amount of titanium and/or vanadium compounds is such that the atomic ratio of the total amount of titanium and/or vanadium to the amount metal of the organometailic compound contained in the granular support is between 0.1 and 0.9, preferably between 0.2 and 0.7.

The catalyst resulting from this third step comprises a support based on a refractory oxide in which halogenated magnesium, tetravalent titanium and/or vanadium and/or trivalent vanadyl compounds are fixed. The atomic ratio between the amount of magnesium and the total amount of titanium and/or vanadium in the solid product can be generally from 2 to 8, preferably from 2.5 to 5.

An electron-donor compound such as a Lewis base can be employed during any of the steps of the preparation of the catalyst, but it is not essential. The quantity of electron-donor compound added, if it is used, in the preparation of the catalyst may be limited to a very small proportion.

The cocatalyst of the present invention is an organometailic compound of a metal of groups I to III of the periodic classification of the elements. It is generally chosen from organoaluminium compounds, such as trialkylaluminium, alkylaluminium hydrides, chlorides or alcoholates or organozinc compounds such as diethylzinc.

In the process of the invention, the catalyst is advantageously used in the form of a prepolymer in particular when polymerisation reactions are performed in gas phase. This prepolymer is prepared by bringing the catalyst into contact with ethylene, optionally mixed with one or more alpha-olefins. This bringing into contact can be effected by known techniques, in particular in suspension in a liquid hydrocarbon, in one or more steps. It is generally carried out with stirring, at a temperature of between 10 and 100°C, preferably between 40 and 90°C and under a pressure generally higher than atmospheric pressure and lower than 2 MPa. The duration of this bringing into contact can be between 10 and 900 minutes and is such that the prepolymer obtained is in the form of a solid containing from 10 to 200 g, preferably from 20 to 100 g, of polymer per millimole of titanium and/or vanadium. The prepolymer is prepared in the presence of cocatalyst and, optionally, in the presence of hydrogen.

The present invention is particularly suitable for producing homopolymers of ethylene e.g. high density polyethylenes (HDPE) and copolymers of ethylene with one or more alpha-olefins e.g. linear low density polyethylenes (LLDPE). The alpha-olefin comonomer can be for example an alpha-olefin having from 3 to 8 carbon atoms. The weight content of comonomer in copolymers is generally less than 20 % , and is often less than 12 %. Ethylene is polymerised in each reactor. Ethylene polymers produced according to the process of the invention can be used for manufacturing various articles by extrusion or blow-molding methods. More particularly these polymers can be used for manufacturing pipes.

The stages of the multistage process according to the invention can be any suitable polymerisation process such as for example slurry or gas phase processes. However the invention is particularly suitable for multistage processes in which at least one reactor is a gas phase reactor and more particularly when the gas phase reactor is used for producing a high melt index ethylene polymer.

For a gas phase polymerisation process gaseous reaction mixture can comprise, in addition to the olefins to be polymerised, an inert gas in a proportion which is identical to or variable from one polymerisation reactor to the other. This inert gas can be chosen, in particular, from nitrogen, methane, ethane, propane, butane or a mixture of these gases. It makes it possible, in particular, appreciably to improve the removal of heat from the polymerisation reaction.

The total pressure of a gaseous reaction mixture can be identical or variable depending on the polymerisation reactor. It is generally higher than atmospheric pressure, and in order to increase the rate of polymerisation, it can range from 0.5 to 5 MPa and preferably from 1 to 3 MPa. The temperature in each polymerisation reactor is held at a value appropriate for the desired rate of polymerisation, without, however, being too close to the softening temperature of the polymer produced. It can therefore be identical or different according to the polymerisation reactor and is generally chosen between 30 and 115°C and preferably from 50 to 110°C.

The average residence time of the polymers forming in each polymerisation reactor can vary within fairly wide limits, in the range in practice from 5 minutes to 10 hours. This average residence time depends, to a large extent, on the temperature prevailing in the polymerisation reactor under consideration.

The gas phase reactors can be chosen from apparatus of types such as fluidised bed reactors, stirred bed reactors, stirred by a mechanical stirrer, or by apparatus comprising a fluidised and stirred bed. Fluidised bed reactors are usually used by passing through a rising stream of reaction gas at a rate of generally between 20 and 100 cm per second.

The process of the invention is preferably carried out continuously in such a way that the operating conditions of each of the polymerisation reactors are substantially constant. This operating method can be obtained in practice by circulating, in each polymerisation reactor, a gaseous reaction mixture of substantially constant characteristics, for the major part composed of the recycled gaseous reaction mixture originating from the same polymerisation reactor.

The operating conditions for the various polymerisation reactors are sufficiently independent of one another for it to be possible to operate each of these reactors under conditions differing from those of the other reactors, in particular in respect of the composition of the catalyst system, the temperature, the average residence time of the polymer and the total pressure.

Consecutive polymerisation reactors are advantageously connected by means of a transfer device which enables the polymer powder produced in the first reactor to be transferred into the second reactor. This device is preferably chosen so as to prevent mutual contamination of the two gaseous reaction mixtures during a powder transfer. Such a transfer device is described for example in European Patent EP-B-192 427.

According to one embodiment of the invention the process comprises two gas phase polymerisation reactions performed in two consecutive reactors. According to this embodiment the first polymerisation reaction is carried out in the presence of a catalyst system comprising a catalyst and a cocatalyst. The latter can be introduced into the first polymerisation reactor with the catalyst, in particular in the prepolymer, or separately. The second polymerisation reaction is carried out in the presence of active polymer powder produced in the first polymerisation reactor. Moreover, it can also be carried out in the presence of an additional amount of catalyst and/or cocatalyst. The additional amount of catalyst can comprise a catalyst identical or different from the catalyst used in the first reactor.

In this embodiment the first gaseous reaction mixture comprises ethylene. Moreover, it can comprise hydrogen, 1-butene, hexene or another alpha-olefin. Hydrogen is generally used in an amount such that the ratio of the partial pressures between hydrogen and ethylene in this first gaseous mixture is greater than or equal to 1. This ratio is most often between 1 and 1.5. Moreover, if it comprises 1-butene, the latter is most often used in an amount such that the ratio of the partial pressures between 1-butene and ethylene in the gaseous mixture is less than or equal to 0.3. Similarly, if it contains a hexene, which can be either 4-methyl-1-pentene or 1-hexene, the ratio of the partial pressures between the hexene and ethylene is most often less than or equal to 0.3. The second gaseous reaction mixture comprises ethylene and optionally hydrogen, 1-butene, a hexene or another alpha-olefin. Most often, the ratio of the partial pressures between hydrogen and ethylene is less than or equal to 0.1, the ratio of the partial pressures between 1-butene and ethylene is less than or equal to 0.3, while the ratio of the partial pressures between the hexene and ethylene is less than or equal to 0.3.

According to this embodiment, the ethylene polymer produced in the first reactor can have a relative density in the range from 0.955 to 0.970, a melt index measured at 190°C under a load of 2.16 kg in the range from 75 to 250 g/10 minutes, a molecular weight distribution (i.e. the ratio of the weight-average molecular weight, Mw, to the number-average molecular weight, Mn, determined by gel permeation chromatography) in the range from 4 to 7, a transition metal content in the range from 15 to 30 ppm, and a hexene or 1-butene content by weight of less than 2%. The final polymer withdrawn from the second reactor can have a relative density in the range from 0.942 to 0.952, a melt index measured at 190°C under a load of 21.6 kg in the range from 4 to 15 g/10 minutes, a molecular weight distribution in the range from 15 to 35, a transition metal content in the range from 7 to 20 ppm, a 1-butene content by weight of less than 1.2% and a hexene content by weight of less than 5%.

Most often, the polymer produced in the first polymerisation reactor represents from 30 to 70% by weight and preferably from 40 to 60% by weight of the final polymer withdrawn from the second polymerisation reactor.

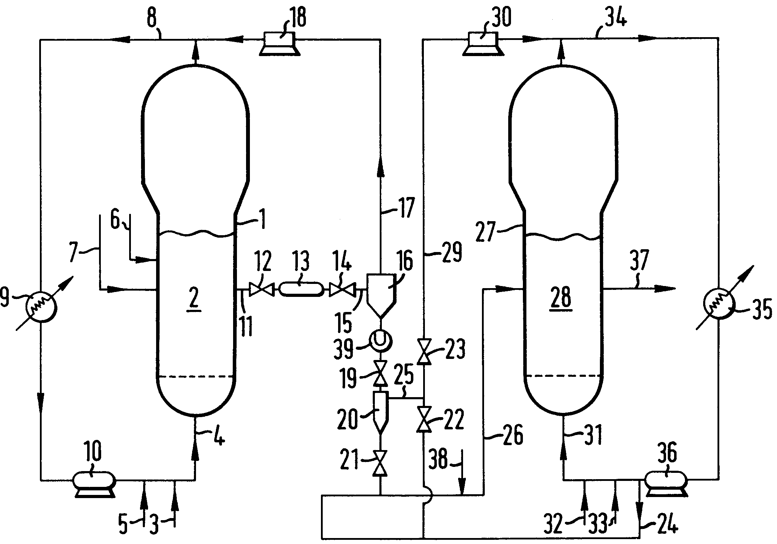

The following examples, with reference to the figure which shows, diagrammatically, an apparatus comprising two fluidised bed reactors, connected to each other by a special transfer device, illustrate the present invention.

The figure shows diagrammatically an apparatus which comprises a first fluidised-bed reactor (1), comprising at (2) the ethylene polymer to be formed. The alpha-olefin or alpha-olefins to be polymerised are introduced into the reactor (1) by pipeline (3) and (4) ; a gas such as hydrogen and/or inert gas such as nitrogen may be intoduced via line (5). The reactor (1) is fed with catalyst or catalyst system by means of the pipe (6) and optionally with cocatalyst by means of the pipe (7). The gaseous reaction mixture leaving the reactor (1) via the pipe (8) is cooled in heat exchanger (9) before being compressed in the compressor (10) and recycled into the reactor (1) via the pipe (4). A part of the polymer present in the reactor (1) leaves this reactor accompanied by gaseous reaction mixture, via the pipe (11); this pipe (11) provided with a valve (12) is connected to a discharge vessel (13). The polymer powder isolated in the discharge vessel (13) is tranferred via the outlet valve (14) and a pipe (15) into a decompression chamber (16) . A part of the gaseous reaction mixture decompressed in decompression chamber (16) may be recycled by means of a pipe (17) and a compressor (18) in the pipe (8) of the reactor (1). The polymer powder is then transferred via a full-bore valve (19) in the compression chamber (20) equipped with valves (21) and (22) which are closed and the valve (23) which is opened. The valve (19) is then closed. The polymer powder collected in the compression chamber (20) is placed under pressure by means of the gaseous reaction mixture coming from the second polymerisation reactor via the pipe (24) and (25), by opening the valve (22), the valve (23) being closed. The polymer powder thus placed under pressure is then conveyed pneumatically, after the opening of the valve (21) via the transfer line (26) into the fluidised-bed reactor (27) containing at (28) the polymer powder; the pipe (26) is fed by a gas stream consisting of the reaction mixture coming the second polymerisation reactor (27) via the pipe (24). A pipe (38) making it possible to introduced an activating agent leads into the transition line (26). After pneumatic conveyance of the polymer as far as the reactor (27), the valves (21) and (22) are closed and the compression chamber (20) is degassed by opening the valve (23); the gas leaving the compression chamber (20) may be recycled into the second polymerisation reactor (27) via the pipe (29) and the compressor (30). The reactor (27) contains at (28) the polymer powder being formed which is maintained in the fluidised state by means of a gas stream introduced into the reactor (27) via the pipe (31). The alpha-olefin or alpha-olefins to be polymerised are introduced into the pipe (31) via the pipe (32); a gas such as hydrogen and/or an an inert gas such as nitrogen may be introduced via the pipe (33). The gaseous reaction mixture leaving the reactor (27) via the pipe (34) is cooled in a heat exchanger (35), before being compressed in the compressor (36) and recycled to the reactor (27) via the pipe (31). The polymer powder present in the reactor (27) leaves the latter via the pipe (37) which is connected to the outside by means of a withdrawal device (not shown). All the operations of the withdrawal, decompression, compression, transfer and introduction of the polymer into the reactor (27) are performed periodically, which makes it possible to provide regular operation of the installation.

Each fluidised bed reactor essentially comprises a vertical cylinder surmounted by a tranquillising chamber and is provided in its lower part with a fluidisation grid.

This apparatus comprises a metering device (39), communicating alternatively with the decompression chamber (16) and the compression chamber (20); this metering device (39) comprises a cavity making it possible to withdraw a given quantity of polymer powder from the decompression chamber (16) via a full-bore valve (19).

### Example 1

### Preparation of a catalyst

A granular support consisting of a silica powder sold by Grace (United States) under the trade designation "SG 332" having a specific surface (BET) of 300 m²/g and a pore volume of 1.7 ml/g was used. It comprised particles having a weight-average diameter of 80 microns. It was dried for 8 hours at 200°C to remove free water. The dried silica powder contained about 2 millimoles of hydroxyl group per gram. All of the operations were carried out under an inert nitrogen atmosphere.

600 ml of n-hexane, 60 g of dried silica were placed into a 1 litre stainless steel reactor fitted with a stirring device rotating at 250 revolutions per minute. Then, in the course of 1 hour, 180 millimoles of dibutylmagnesium, at a temperature of 20°C, were introduced into the reactor. The solid present in the reactor was then washed 5 times with 400 ml of n-hexane and a solid containing about 2.5 millimoles of magnesium per gram of silica was obtained.

The reactor was then heated to 50°C and 300 millimoles of tert-butyl chloride were introduced therein in the course of 1 hour, with stirring. At the end of this time, stirring of the mixture was continued for 1 hour at 50°C and the mixture was then cooled to ambient temperature (20°C). A solid product (R) which contained chlorine and magnesium in a Cl/Mg molar ratio of 1.7 and which did not contain any functional groups having a reducing effect on titanium tetrachloride was obtained as a suspension in n-hexane. The liquid phase of this suspension contained 500 ppm of tert-butyl chloride.

The reactor containing the suspension of the solid product (R) in n-hexane was then heated to 50°C. 60 millimoles of titanium tetrachloride were introduced therein, with stirring, in the course of 1 hour. The mixture thus obtained was stirred for a further 2 hours at 70°C and was then washed 3 times with 600 ml of n-hexane. 6 millimoles of dimethylformamide were added and the mixture was stirred for 1 hour at 50°C and then cooled to ambient temperature. A solid (S) suspended in n-hexane was thus obtained which contained 2.5 millimoles of magnesium and 0.78 millimole of tetravalent titanium per gram of silica.

2 litres of n-hexane, 9.6 millimoles of tri-n-octylaluminium and an amount of the solid product (S) containing 6 millimoles of titanium were introduced into a 5 litre stainless steel reactor provided with a stirring device rotating at 750 revolutions per minute and heated to 70°C. A volume of 280 ml of hydrogen, measured under normal conditions, was then introduced into the reactor and ethylene was then introduced at a regular flow rate of 60 g/h for 4 hours. At the end of this time, the reactor was degassed and its contents were transferred into a rotary evaporator where the n-hexane was evaporated at 60°C under a partial vacuum. The ready-to-use solid catalyst (T) was thus obtained in the form of a powder consisting of particles having a weight-average diameter of 250 microns and containing 40 g of polyethylene per millimole of titanium.

### Production of an ethylene polymer having a relative density of 0.952

The process was carried out in an apparatus comprising two different fluidised bed reactors connected to one another by means of a transfer device constructed in accordance with the figure.

The first reactor comprised a cylindrical part, having a vertical axis, 45 cm in diameter and 7.2 m high. The second reactor comprised a cylindrical part, having a vertical axis, 90 cm in diameter and 6 m high.

The first reactor contained a fluidised bed, having a height of 1.9 m, of particles of ethylene polymer in formation, and an ascending stream of a first gaseous reaction mixture rising at a rate of 50 cm/s and having a total pressure of 1.70 MPa and a temperature, measured at the outlet of the tranquillising chamber, of 95°C passes through this fluidised bed.

The first gaseous reaction mixture comprised, by volume, 35% of ethylene, 0.3% of 1-butene, 35% of hydrogen, 3% of ethane and 26.7% of nitrogen. As a result, the ratio of the partial pressures of hydrogen to ethylene was 1 and the ratio of the partial pressures of 1-butene to ethylene was close to 0.01. The reactor was fed, with the aid of the prepolymer feed pipe, with a prepolymerised catalyst prepared as above, at a flow rate of 350 g/hour.

The polymer forming in this first reactor was produced at a rate of 25 kg/hour and at a relative density of 0.964, a 1-butene content of less than 0.5% by weight, a titanium content of 17 ppm and a melt index, measured at 190°C under a load of 2.16 kg, of 150 g/10 minutes.

This polymer was withdrawn from the first reactor at a flow rate of 25 kg/hour and was introduced at the same flow rate into the second reactor by means of the transfer device. The introduction of polymer into the second reactor was effected by means of the polymer feed line. In the polymer withdrawn from the first reactor, the fine polymer particles having a diameter of less than 125 microns represented less than 1% of all of the particles making up this polymer.

The second reactor contained a fluidised bed, having a height of 1.5 m, of particles of ethylene polymer in formation, and an ascending stream of a second gaseous reaction mixture rising at a rate of 35 cm/s and having a total pressure of 1.7 MPa and a temperature, measured at the outlet of the tranquillising chamber, of 70°C passes through this fluidised bed. This second reaction mixture comprised, by volume, 44% of ethylene, 0.8% of 4-methyl-1-pentene, 1.3% of hydrogen and 53.9% of nitrogen. As a result, the ratio of the partial pressures of hydrogen to ethylene was 0.03 and the ratio of the partial pressures of 4-methyl-1-pentene to ethylene was 0.018. The final polymer produced in the second reactor was withdrawn at a flow rate of 50 kg/hour and had a relative density of 0.952, a 1-butene content of less than 0.25% by weight, a 4-methyl-1-pentene content of 0.7% by weight, a titanium content of 9 ppm, a melt index, measured at 190°C under a load of 21.6 kg, of 8 g/10 minutes and a molecular weight distribution of 20.

### Example 2

### Preparation of a catalyst

A granular support consisting of a silica powder sold by Grace (United States) under the trade designation "SG 332" having a specific surface (BET) of 300 m²/g and a pore volume of 1.7 ml/g was used. It comprised particles having a weight-average diameter of 80 microns. It was dried for 8 hours at 200°C to remove free water. The obtained dried silica contained about 2 millimoles of hydroxyl group per gram. All of the operations were carried out under an inert nitrogen atmosphere.

600 ml of n-hexane, 60 g of dried silica was placed into a 1 litre stainless steel reactor fitted with a stirring device rotating at 250 revolutions per minute. Then in the course of 1 hour, 180 millimoles of dibutylmagnesium, at a temperature of 20°C, were introduced into the reactor. The solid present in the reactor was then washed 5 times with 400 ml of n-hexane and a solid containing about 2.5 millimoles of magnesium per gram of silica was obtained.

The reactor was then heated to 50°C and 300 millimoles of tert-butyl chloride were introduced therein slowly in the course of 1 hour, with stirring. At the end of this time, stirring of the mixture was continued for 1 hour at 50°C and the mixture was then cooled to ambient temperature (20°C). A solid product (R) which contained chlorine and magnesium in a Cl/Mg molar ratio of 1.7 and which did not contain any functional groups having a reducing effect on titanium tetrachloride was obtained as a suspension in n-hexane. The liquid phase of this suspension contained 500 ppm of tert-butyl chloride.

The reactor containing the suspension of the solid product (R) in n-hexane was then heated to 50°C. 75 millimoles of titanium tetrachloride were introduced therein slowly, with stirring, in the course of 2 hours. The mixture thus obtained was stirred for a further 2 hours at 80°C and was then washed 3 times with 600 ml of n-hexane. 2.5 millimoles of dimethylformamide were added and the mixture was stirred for 1 hour at 50°C and then cooled to ambient temperature. A solid (S) suspended in n-hexane was thus obtained which contained 2.5 millimoles of magnesium and 1.2 millimoles of tetravalent titanium per gram of silica.

2 litres of n-hexane, 9.6 millimoles of tri-n-octylaluminium and an amount of solid product (S) containing 6 millimoles of titanium were introduced into a 5 litre stainless steel reactor fitted with a stirring device rotating at 750 revolutions per minute and heated at 750 revolutions per minute and heated to 70°C. A volume of 280 ml of hydrogen, measured under normal conditions, was then introduced into the reactor and ethylene was then introduced at a regular flow rate of 60 g/h for 4 hours. At the end of this time, the reactor was degassed and its contents were transferred into a rotary evaporator where the n-hexane was evaporated at 60°C under a partial vacuum. The ready-to-use solid catalyst (T) was thus obtained in the form of a powder consisting of particles having an average diameter of 250 microns and containing 40 g of polyethylene per millimole of titanium.

### Production of an ethylene polymer having a relative density of 0.945

The process was carried out in an apparatus identical to that used in Example 1.

The first reactor contained a fluidised bed, having a height of 2 m, of particles of ethylene polymer in formation, and an ascending stream of a first gaseous reaction mixture rising at a rate of 50 cm/s and having a total pressure of 1.80 MPa and a temperature, measured at the outlet of the tranquillising chamber, of 95°C passed through this fluidised bed. This first gaseous reaction mixture comprised, by volume, 35% of ethylene, 0.3% of 1-butene, 35% of hydrogen, 3% of ethane and 26.7% of nitrogen. As a result, the ratio of the partial pressures of hydrogen to ethylene was 1 and the ratio of the partial pressures of 1-butene to ethylene was close to 0.01. The reactor was fed, with the aid of the prepolymer feed pipe, with a prepolymerised catalyst prepared as above, at a flow rate of 350 g/hour. The polymer forming in this first reactor was produced at a rate of 25 kg/hour and has a relative density of 0.965, a 1-butene content of less than 0.5% by weight, a titanium content of 17 ppm and a melt index, measured at 190°C under a load of 2.16 kg, of 150 g/10 minutes.

This polymer was withdrawn from the first reactor at a flow rate of 25 kg/hour and was introduced at the same flow rate into the second reactor by means of the transfer device. The introduction of polymer into the second reactor was effected by means of the polymer feed line. In the polymer withdrawn from the first reactor, the fine polymer particles having a diameter of less than 125 microns represented less than 1% of all of the particles making up this polymer.

The second reactor contained a fluidised bed, having a height of 1.5 m, of particles of ethylene polymer in formation, and an ascending stream of a second gaseous reaction mixture rising at a rate of 35 cm/s and having a total pressure of 1.8 MPa and a temperature, measured at the outlet of the tranquillising chamber, of 70°C passed through this fluidised bed. This second gaseous reaction mixture comprised, by volume, 44% of ethylene, 3.5% of 4-methyl-1-pentene, 0.5% of hydrogen and 52% of nitrogen. As a result, the ratio of the partial pressures of hydrogen to ethylene was 0.011 and the ratio of the partial pressures of 4-methyl-1-pentene to ethylene was 0.08. The final polymer produced in the second reactor was withdrawn at a flow rate of 42 kg/hour and at a relative density of 0.945, a 1-butene content of less than 0.25% by weight, a 4-methyl-1-pentene content of close to 2.2% by weight, a titanium content of 10 ppm, a melt index, measured at 190°C under a load of 21.6 kg, of 6 g/10 minutes, and a molecular weight distribution of 25.

### Example 3

### Preparation of a catalyst

The procedure was exactly as in Example 2.

### Production of an ethylene polymer having a relative density of 0.945

The reaction was carried out in an apparatus identical to that used in Example 1.

The first reactor contained a fluidised bed, having a height of 2 m, of particles of ethylene polymer in formation, and an ascending stream of a first gaseous reaction mixture rising at a rate of 50 cm/s and having a total pressure of 2.00 MPa and a temperature, measured at the outlet of the tranquillising chamber, of 95°C passed through this fluidised bed. This first gaseous reaction mixture comprised, by volume, 35% of ethylene, 45% of hydrogen, 3% of ethane and 17% of nitrogen. As a result, the ratio of the partial pressures of hydrogen to ethylene was 1.3. The reactor was fed, with the aid of the prepolymer feed pipe, with a prepolymerised catalyst prepared as above, at a flow rate of 350 g/hour. The polymer forming in this first reactor was produced at a rate of 23 kg/hour and at a relative density of 0.970, a titanium content of 20 ppm and a melt index, measured at 190°C under a load of 2.16 kg, of 150 g/10 minutes.

This polymer was withdrawn from the first reactor at a flow rate of 23 g/hour and was introduced at the same flow rate into the second reactor by means of the transfer device. The introduction of polymer into the second reactor was effected by means of the polymer feed line. In the polymer withdrawn from the first reactor, the fine polymer particles having a diameter of less than 125 microns represented less than 1% of all of the particles making up this polymer.

The second reactor contained a fluidised bed, having a height of 1.5 m, of particles of ethylene polymer in formation,and an ascending stream of a second gaseous reaction mixture rising at a rate of 35 cm/s and having a total pressure of 1.8 MPa and a temperature, measured at the outlet of the tranquillising chamber, of 70°C passed through this fluidised bed. This second gaseous reaction mixture comprised, by volume, 44% of ethylene, 4.5% of 4-methyl-1-pentene, 0.3% of hydrogen and 51.2% of nitrogen. As a result, the ratio of the partial pressures between hydrogen and ethylene was close to 0.007 and the ratio of the partial pressures of 4-methyl-1-pentene to ethylene was 0.1. The final polymer produced in the second reactor was withdrawn at a flow rate of 38 kg/hour and at a relative density of 0.945, a 4-methyl-1-pentene content of 4% by weight, a titanium content of 12 ppm, a melt index, measured at 190°C under a load of 21.6 kg, of 5 kg/10 minutes and a molecular weight distribution of 25.

## Claims

1. A multistage polymerisation process for producing ethylene polymers, performed in two or more consecutive polymerisation reactors, with the aid of a catalyst system of the Ziegler-Natta type comprising a catalyst and a cocatalyst, characterised in that the catalyst used is prepared by a process comprising:
a) in a first step, bringing a granular support based on a refractory oxide, having hydroxyl groups, into contact with an organometailic compound comprising a dialkylmagnesium or a dialkylmagnesium and a trialkylaluminium,
b) in a second step, bringing the product resulting from the first step into contact with a monochlorinated organic compound of the general formula R₆R₇R₈CCl or of the general formula R₉R₁₀R₁₁CCl, in which R₆ and R₇ are identical or different alkyl radicals comprising from 1 to 6 carbon atoms, R₈ is a hydrogen atom or an alkyl radical comprising from 1 to 6 carbon atoms which is identical to or different from R₆ and R₇, R₉ is an aryl radical comprising from 6 to 10 carbon atoms and R₁₀ and R₁₁ are identical or different radicals chosen from hydrogen, alkyl radicals comprising from 1 to 6 carbon atoms and aryl radicals having from 6 to 10 carbon atoms, which are identical to or different from R₉, and
c) in a third step, bringing the product resulting from the second step into contact with at least one tetravalent titanium or vanadium compound or a trivalent vanadyl compound.

2. A process according to claim 1, characterised in that, in the first step of the preparation of the catalyst, from 0.1 to 7.5 millimoles of organometailic compound are used per gram of support.

3. A process according to claim 1 or 2, characterised in that the monochlorinated organic compound is secondary propyl chloride, secondary butyl chloride, tert-butyl chloride, benzyl chloride or 1-phenyl-1-chloroethane.

4. A process according to any one of claims 1 to 3, characterised in that, in the second step of the preparation of the catalyst, an amount of monochlorinated organic compound is used such that the molar ratio of the amount of monochlorinated organic compound to the amount of metal of the organometailic compound contained in the product resulting from the first step is between 1 and 3.5.

5. A process according to any one of claims 1 to 4, characterised in that, in the third step of the preparation of the catalyst, the titanium or vanadium compound or compounds are used in an amount such that the atomic ratio of the amount of titanium and/or vanadium to the amount of metal of the organometailic compound contained in the granular support is between 0.1 and 0.9.

6. A process according to any one of claims 1 to 5, characterised in that the titanium or vanadium compound is chosen from a tetravalent titanium compound of general formula:
Ti(OR)ₘX₄₋ₘ
a tetravalent vanadium compound of general formula
V(OR)ₘX₄₋ₘ
or a trivalent vanadyl compound of general formula
VO(OR)ₙX₃₋ₙ
in which R is an alkyl radical comprising from 2 to 6 carbon atoms, X is a chlorine or bromine atom and m is an integer or fraction equal to or greater than 0 and less than 4 and n is an integer or fraction equal to or greater than 0 and less than 3.

7. A process according to any one of claims 1 to 6, characterised in that it comprises two gas phase polymerisation reactions performed in two consecutive reactors containing gaseous reaction mixtures which contain ethylene and in that the first gaseous mixture comprises hydrogen in an amount such that the ratio of the partial pressures of hydrogen to ethylene is greater than or equal to 1.

8. A process according to claim 7, characterised in that the second gaseous reaction mixture comprises hydrogen in an amount such that the ratio of the partial pressures of hydrogen to ethylene is less than or equal to 0.1.

9. An ethylene polymer, obtainable in the first reactor of the process according to Claim 7, having a relative density in the range from 0.955 to 0.970, a melt index, measured at 190°C under a load of 21.6 kg, in the range from 75 to 250 g/10 minutes, a molecular weight distribution in the range from 4 to 7 and a transition metal content in the range from 15 to 30 ppm.

10. An ethylene polymer, obtainable by the process according to Claim 8, having a relative density in the range from 0.942 to 0.952, a melt index, measured at 190°C under a load of 21.6 kg, in the range from 4 to 5 g/10 minutes, a molecular weight distribution in the range from 15 to 35 and a transition metal content in the range from 7 to 20 ppm.
